**Europäisches Patentamt**

**European Patent Office**

**Office européen des brevets**

(19)

(11) Veröffentlichungsnummer: **0 165 421 B1**

(12) # EUROPÄISCHE PATENTSCHRIFT

(45) Veröffentlichungstag der Patentschrift:
**17.11.88**

(21) Anmeldenummer: **85105431.2**

(22) Anmeldetag: **03.05.85**

(51) Int. Cl.⁴: **A 47 J 27/04**

(54) **Dampfentsafter.**

(30) Priorität: **19.05.84 DE 3418729**
**07.12.84 DE 3444722**

(43) Veröffentlichungstag der Anmeldung:
**27.12.85 Patentblatt 85/52**

(45) Bekanntmachung des Hinweises auf die Patenterteilung:
**17.11.88 Patentblatt 88/46**

(84) Benannte Vertragsstaaten:
**AT BE CH DE IT LI LU NL**

(56) Entgegenhaltungen:
**DE - C - 851 545**
**FR - A - 337 158**
**FR - A - 829 426**
**GB - A - 113 868**
**GB - A - 854 124**
**US - A - 1 371 520**

(73) Patentinhaber: **J. Weck GmbH & Co., Wehratalstrasse 6, D-7867 Wehr (DE)**

(72) Erfinder: **Hackelsberger, Eberhard, Dipl. Betr. wirt, Wehratalstrasse 6, D-7867 Wehr-Öflingen (DE)**

(74) Vertreter: **Selting, Günther et al, Patentanwälte Von Kreisler-Schönwald-Fues-Keller Selting-Werner Deichmannhaus am Hauptbahnhof, D-5000 Köin 1 (DE)**

## Beschreibung

Die Erfindung betrifft einen Dampfentsafter mit einem Wassertopf zur Erzeugung von Wasserdampf und darauf aufgesetztem Saftauffangbehälter, der mit einer Dampftülle versehen ist, und mit einem oberhalb der Saftauffangbehälter angeordneten Fruchtbehälter zur Aufnahme von Früchten, dessen Boden in seinem mittleren Bereich mit einem Leitkörper zur Verteilung des Wasserdampfes versehen ist, der aus der Dampftülle austretend, durch die Sieböffnungen im unteren Bereich des Fruchtbehälters in diesen und zwischen die Früchte eintritt und dadurch der Saft gewonnen wird, der durch die vorerwähnten Sieböffnungen des Fruchtbehälters in den Saftauffangbehälter gelangt. Dampfentsafter der vorbeschriebenen Ausbildung sind auf dem Markt und gehen im Prinzip auch aus der GB-A 854 124 hervor. Sie arbeiten in der nachfolgenden Weise:

Aus dem Wassertopf, in dem während der ganzen abhängig von den Früchten im Rezept vorgeschriebenen Kochzeit das Wasser sprudelnd kochen muss, steigt durch die kegelförmige Tülle des Saftauffangbehälters heisser Dampf unter den Fruchtbehälter und dringt durch seine Boden- und Seitenfläche zwischen die Früchte – auch in Gestalt von Gemüse und Kräuter – und bringt sie bzw. ihre Zellen zum Platzen, so dass ihr Saft ausläuft, der durch die Sieböffnungen, insbesondere im Boden des Fruchtbehälters, in den Saftauffangbehälter abtropft und sich dort sammelt. Alle Gärkeime und Bakterien werden dabei durch den heissen Dampf abgetötet, während Aroma, Nährstoffe und Vitamine weitgehend erhalten bleiben. Der Saft wird dann heiss durch das Ablaufröhrchen bzw. den aufgesteckten Gummischlauch mittels Schlauchklemme direkt in die vorbereiteten Flaschen abgelassen.

Bei den Dampfentsaftern der vorbeschriebenen Ausbildung ist die vom Boden des Saftbehälters ausgehende mittig angeordnete Tülle im Querschnitt kegelförmig ausgebildet, so dass sie sich nach oben stark verjüngt. Der Austrittsöffnung der Tülle gegenüberliegend ist der Boden des Fruchtbehälters mit einer Vertiefung versehen, so dass ein in den Fruchtbehälter hineinragender Leitkörper vorhanden ist, in dem die Dampftülle mit ihrem oberen Ende hineinragt mit dem Ergebnis, dass der so ausgebildete Leitkörper, der ohne, aber auch mit Sieböffnungen versehen sein kann, den Wasserdampf in Richtung nach aussen und unten umlenkt, damit er durch die am Boden, aber auch durch die in der zylindrischen Seitenwandung vorhandenen Sieböffnungen in den Fruchtkorb eintreten kann. Der die Auslassöffnung der Tülle umgebende Leitkörper deckt die Auslassöffnung der Dampftülle von aussen in der Weise ab, dass der damit erhaltene, die Dampftülle umgebenden Ringspalt einen Auslassquerschnitt hat, der um ein Mehrfaches grösser ist als der Austrittsquerschnitt der Dampftülle. Durch diese Massgabe ergibt sich, dass bei dem aufgesetzten Fruchtkorb zur Entsaftung ein grosser Austrittsquerschnitt mit entsprechend geringer Dampfaustrittsgeschwindigkeit vorhanden ist, während bei abgehobenem Fruchtkorb die Austrittsgeschwindigkeit des Wasserdampfes höher ist. Damit diese für die Bedienungsperson nicht gefährlich ist, ist sie ebenfalls gering. Geringe Austrittsgeschwindigkeiten haben eine entsprechend geringe Wirkung auf die Entsaftung, einen grösseren Dampf- und damit Wasserverbrauch, der zu einer verringerten Saftkonzentration führt. Auch braucht bei den Dampfentsaftern der vorbeschriebenen Ausbildung und Wirkung die Entsaftung eine geraume Zeit, die mit einem entsprechend höheren Energieaufwand verbunden ist.

Die vorliegende Erfindung geht von der Aufgabe aus, einen einfachen Dampfentsafter zu schaffen, der in kurzer Zeit mit geringem Energieaufwand eine Entsaftung mit hoher Ausbeute erbringt.

Zur Lösung dieser Aufgabe wird bei einem Dampfentsafter mit einem Wassertopf zur Erzeugung von Wasserdampf und darauf aufgesetztem Saftauffangbehälter, der mit einer Dampftülle versehen und weiterhin oberhalb des Saftauffangbehälters ein Fruchtbehälter zur Aufnahme von Früchten angeordnet ist, dessen Boden in seinem mittleren Bereich mit einem Leitkörper zur Verteilung des Wasserdampfes versehen ist, der aus der Dampftülle austretend, durch die Sieböffnungen im unteren Bereich des Fruchtbehälters in diesen und zwischen die Früchte eintritt und dadurch der Saft gewonnen wird, der durch die vorerwähnten Sieböffnungen des Fruchtbehälters in den Saftauffangbehälter gelangt, erfindungsgemäss vorgeschlagen, dass der Leitkörper zugleich als Sicherungskörper ausgebildet ist, der bei dem auf den Saftauffangbehälter aufgesetzten Fruchtbehälter von oben in der Weise mit der Dampftülle zusammenwirkt, dass der Austrittsquerschnitt der Dampftülle unter Belassung einer Ringdüse zur Erzeugung einer hohen Dampfaustrittsgeschwindigkeit sehr stark eingeengt ist und mit dem Abheben des Fruchtbehälters von dem Saftauffangbehälter der volle Austrittsquerschnitt der Dampftülle vorhanden ist und damit die Dampfaustrittsgeschwindigkeit auf einen niedrigen und für die Handhabung ungefährlichen Wert abgesenkt ist.

Mit der Erfindung wird erreicht, dass die Tülle des Saftauffangbehälters zunächst einen grossen Querschnitt hat und dieser Austrittsquerschnitt erst dann erniedrigt wird, sobald der Fruchtbehälter auf den Saftauffangbehälter aufgesetzt und damit der am Boden des Fruchtbehälters befindliche Leitkörper den Austrittsquerschnitt der Tülle stark einengt, insbesondere sofern der Leitkörper in die Tülle eindringt. Mit dem Aufsetzen des Fruchtbehälters auf den Saftauffangbehälter wird somit eine Ringdüse geschaffen, die eine bisher nicht mögliche hohe Austrittsgeschwindigkeit des Wasserdampfes ergibt. Diese verengte Düse ist somit nur vorhanden bei zusammengefügtem Saftauffangbehälter und Fruchtbehälter während des Betriebes. Sobald die Hausfrau den Fruchtbehälter von dem Saftauffangbehälter abhebt, dann wird automatisch der Auslassquerschnitt der Tülle auf ein solches Mass erhöht, dass schlagartig die Austrittsgeschwindigkeit auf einen niedrigen Wert absinkt und damit vollkommen ungefährlich ist. Nach der Erfindung ist somit eine einfache und zuverlässige Sicherung vorhanden.

In weiterer erfindungsgemässer Ausgestaltung wird vorgeschlagen, dass die Tülle unter Belassung eines ringsumlaufenden Spaltes von oben durch einen am Boden des Fruchtbehälters vorhandenen Leit- bzw. Sicherungskörper abgedeckt ist.

Es ist nicht notwendig, dass der Leit- bzw. Sicherungskörper in die Tülle eingreift. Er kann auch im nahen Bereich der Austrittsöffnung der Tülle oberhalb der Tülle enden. Wesentlich ist, dass er bei seiner Anordnung in oder im nahen Bereich des Austritts der Tülle die Austrittsgeschwindigkeit des Wasserdampfes erhöht und bei seiner Entfernung von der Tülle diesen auf einen geringen, für die Handhabung unschädlichen Wert, absinken lässt.

Die Erfindung macht es möglich, den Austrittsquerschnitt der Tülle so gering zu bemessen, dass Wasserdampf aus dieser mit einer hohen Geschwindigkeit austritt. Dies führt zufolge der hohen Austrittsgeschwindigkeit dazu, dass eine intensive Durchströmung des Wasserdampfes zwischen den Früchten im Fruchtbehälter stattfindet und entsprechend zufolge der hohen Strömungsgeschwindigkeit die Abkühlung des Dampfes auf der Wegstrecke zwischen Austritt aus der Tülle und den Früchten im Fruchtbehälter entsprechend gering ist. Durch die mögliche hohe Geschwindigkeit des Wasserdampfes, die bei Anwendung der Erfindung mindestens doppelt so hoch wie die in bisherigen Dampfentsaftern erreichbare Geschwindigkeit sein kann, wird eine schnelle und damit auch gründliche Entsaftung erreicht.

Die hohe Dampfgeschwindigkeit bewirkt auch, dass der Dampf verbessert zwischen den einander anliegenden Flächen von Früchten oder Kräutern durchdringt und somit zu einer wesentlichen ganzflächigen Beaufschlagung der Früchte, Kräuter oder Pflanzen führt. Auch dringt der Dampf mit seiner hohen Geschwindigkeit verbessert in die Poren der Fruchtschalen ein, so dass damit deren Aufplatzen begünstigt wird.

Zur Erreichung der vorerwähnten, bei der Entsaftung vorhandenen höheren Geschwindigkeiten des Wasserdampfes hat eine Tülle einen Durchmesser von 35 bis 10 mm bzw. eine entsprechende Querschnittsfläche von 962 bis 78 mm².

Versuche haben ergeben, dass eine schnelle und gründliche Entsaftung, vorgenommen an verschiedenen Fruchtarten und Kräutern, dann stattfindet, sofern die Tülle einen Durchmesser von 35 bis 20 mm bzw. eine Querschnittsfläche von 962 bis 314 mm² hat und dadurch der Wasserdampf mit einer höheren Geschwindigkeit und einer höheren Temperatur aus der Düse austritt.

Die erfindungsgemässe Lösung führt auch zu einer Vereinfachung eines Dampfentsafters. Da der Wasserdampf mit erhöhter Geschwindigkeit und erhöhter Temperatur sowie erhöhtem Druck aus der Tülle austritt, die nach der vorliegenden Erfindung eine Dampfstrahldüse darstellt, genügt es, dass lediglich der Boden des Fruchtbehälters mit Sieböffnungen versehen ist, durch die der Wasserdampf in den Fruchtbehälter zwischen die Früchte hindurch nach oben strömt. Es ist somit nicht notwendig, die Seitenwandungen des Fruchtbehälters ebenfalls mit Sieböffnungen zu versehen.

Die erfindungsgemässe Lösung führt auch dazu, dass nunmehr weniger Sieböffnungen vorhanden zu sein brauchen.

Dem Leit- oder Sicherungskörper kommt die weitere wichtige Aufgabe zu, den Wasserdampf zu leiten. So soll er durch seine Anwesenheit und möglichst auch durch seine Formgebung den Wasserdampf gleichmässig über den mit Sieböffnungen versehenen Boden des Fruchtkorbes verteilen.

Besonders vorteilhaft ist einstückig mit dem Boden des Fruchtbehälters ein ausgeformter Leit- und Sicherungskörper vorhanden, der besonders vorteilhaft in der Mitte des Bodens nach unten vorstehend mit abgerundeter Kuppe ausgebildet ist, wobei der ringsum angrenzende, mit Sieböffnungen versehene Boden des Fruchtbehälters über eine Umkehrkurve konkav gewölbt ausgebildet ist und diese Wölbung zum äusseren Rand des Fruchtbehälters abfällt.

In weiterer erfindungsgemässer Ausgestaltung wird vorgeschlagen, dass der Fruchtbehälter in seinem oberen Teil einen Durchmesser hat, der dem Saftauffangbehälter entspricht und im Bereich der halben Höhe eine stufenförmige Verringerung des Durchmessers des unteren Teils vorhanden ist und in dieser ringsumlaufenden Stufe Durchtrittsöffnungen vorhanden sind.

Durch die Ausbildung des Fruchtbehälters mit zwei verschiedenen Durchmessern und die Anordnung von Durchlässen in dem Übergang von dem unteren kleineren Durchmesser zu dem oberen grösseren Durchmesser oder in anderen Worten in dem dadurch gebildeten Boden des oberen Fruchtbehälter-Bereiches wird erreicht, dass auch die im oberen Teil des Fruchtbehälters liegenden Früchte mit frischem Dampf versorgt werden, so dass im Endergebnis eine Durchströmung mit frischem Dampf im oberen Bereich des Fruchtbehälters stattfindet. Dadurch erfolgt eine schnellere Bedampfung der Früchte und im oberen Bereich auch mit höherer als bisher möglichen Temperatur.

Insgesamt gibt die erfindungsgemässe Lösung mit der schnellen und hochwirksamen Bedampfung des gesamten Fruchtbehälters in Verbindung mit dem Saftauffangbehälter erfindungsgemässer Ausbildung, weil mit weniger Wasserdampf eine stärkere Wirkung zu erreichen ist, ein Sirup mit höherer Konzentration, der bei vielen Früchten, zum Beispiel bei Kirschen, entsprechend süsser ist. Daher bedarf es keiner oder einer nur geringen Zugabe von Zucker.

In weiterer erfindungsgemässer Ausgestaltung wird vorgeschlagen, dass der Saftauffangbehälter und auch der Fruchtbehälter aus Kunststoff, und zwar besonders vorteilhaft aus dem Kunststoff Polypropylen bestehen.

Durch diese Lösung wird nicht lediglich ein geringes Gewicht der beiden Behältnisse erreicht, sondern auch eine dichte Anlage der ineinander gesteckten Behälter mit einem in diesen erzielbaren höheren Dampfdruck. Diese bestehen bisher aus emailliertem Blech mit dem Ergebnis, dass eine unebene Oberfläche vorhanden war, die auch an den Anlageflächen der ineinander gesteckten Behälterteile zu Undichtigkeiten führte, so dass ein Teil des Wasserdampfes nach aussen drang.

Auch ergibt der Vorschlag, den Saftauffangbehälter und den Fruchtbehälter aus Kunststoff zu fertigen, neben der genauen Masshaltigkeit eine verbesserte Isolation nach aussen. Diese Massnahmen führen dazu, dass nunmehr der Wassertopf in seinem Volumen erheblich verkleinert werden kann. Während er bei Dampfentsaftern bisheriger Ausbildung und vergleichbarem Füllvolumen für die zu behandelnden Früchte ein Fassungsvermögen von sechs Litern hatte, hat er bei der erfindungsgemässen Lösung nur ein Fassungsvermögen von 2,5 Liter.

Die erfindungsgemässe Lösung führt auch dazu, dass nunmehr die Entsaftung in einem viel kürzeren Zeitraum stattfindet. Während bisher eine Zeit von einer Stunde notwendig war, ist mit der erfindungsgemässen Lösung bei gleichem Volumen der Früchte nur eine Entsaftungs-Zeit von 30 Minuten notwendig.

In weiterer erfindungsgemässer Ausgestaltung wird vorgeschlagen, dass im Boden des Saftauffangbehälters über die Fläche des Bodens gleichmässig verteilt mehrere, insbesondere drei Tüllen vorhanden sind. Diese Anordnung von drei Tüllen führt zu einer verbesserten Gleichverteilung des aus diesen Tüllen austretenden Wasserdampfes.

Der am Boden des Fruchtbehälters vorhandene Leitkörper kann mit dem Boden des Leitkörpers einstückig sein. Besonders vorteilhaft ist er an der Unterseite des Fruchtbehälters befestigt. In Verbindung mit dem weiteren Vorschlag, mehrere Dampftüllen zu verwenden, sind die Leitkörper als Füsse des Fruchtbehälters ausgebildet.

Die Erfindung ist in der Zeichnung beispielhaft dargestellt. Es zeigen:

Figur 1 einen Dampfentsafter im vertikalen Schnitt,

Figur 2 einen Figur 1 gegenüber abgewandelten Dampfentsafter im vertikalen Schnitt,

Figur 3 einen Teilausschnitt nach Figur 2 mit abgewandeltem Leit- bzw. Sicherungskörper,

Figur 4 einen weiterhin abgewandelten Dampfentsafter in vertikalem Schnitt,

Figur 5 den Fruchtbehälter nach Figur 4 in einzelner Darstellung,

Figur 6 einen horizontalen Schnitt durch den Dampfentsafter nach Figur 4 entsprechend der dortigen Linie VI–VI,

Figur 7 einen vertikalen Schnitt durch einen Figur 1 gegenüber abgewandelten Dampfentsafter.

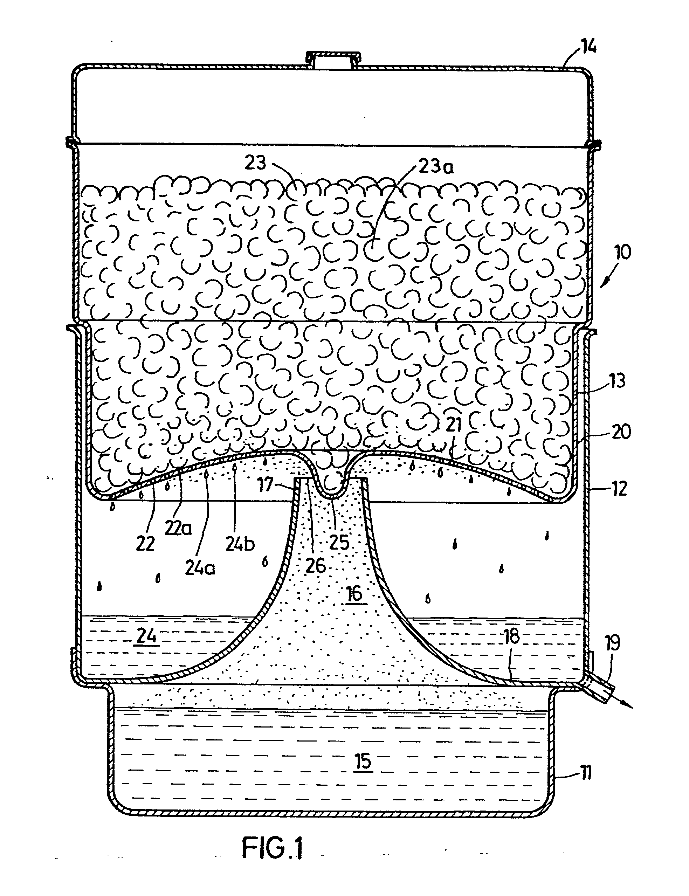

Figur 1 zeigt den Dampfentsafter 10, der aus dem Wassertopf 11, dem Saftauffangbehälter 12, dem Fruchtbehälter 13 und dem Deckel 14 besteht. Der Wasserbehälter hat einen Durchmesser von 320 mm. Die Oberfläche des Wasserbades beträgt 800 cm².

Das in dem Wassertopf 11 vorhandene Wasser 15 wird über eine Heizplatte mit einem Durchmesser von 220 mm und einer Leistung von zwei kW zum Kochen gebracht und bildet den in Gestalt von Punkten dargestellten Dampf 16, der durch eine Tülle 17 austritt, die am Boden 18 des Saftauffangbehälters 12 angeordnet ist und mit diesem einstückig ist.

Am Rand des Bodens ist das bekannte Saftablassröhrchen 19 vorhanden. Der Fruchtbehälter 13 hat die Seitenwandung 20 und den Boden 21, der mit einer Vielzahl von Sieböffnungen 22, 22a versehen ist, damit der Wasserdampf 16 durch diese Sieböffnungen in den Fruchtbehälter 13 mit den darin befindlichen Früchten 23, 23a usw. eindringt und aus diesen in den Saftbehälter 12 der Saft 24 gelangt, der im Bereich der Sieböffnungen als Tropfen 24a, 24b dargestellt ist. An dem Boden 21 des Fruchtbehälters ist ein Leitkörper und Sicherungskörper 25 vorhanden.

Die in Figur 1 dargestellte Lösung zeigt somit die Ausbildung einer Tülle als Düse mit einem als Ring ausgebildeten Auslass und dem Leit- und Sicherungskörper 25, der somit ein Sicherheitsventil ist.

Es sei verstanden, dass die erfindungsgemässe Lösung auch angewendet werden kann ohne den in die Tülle hineinragenden durch an dessen Austritt 26 stark heranreichenden Leitkörper durch die Massgabe, dass die Tülle an ihrem Auslass 26 einen Durchmesser von 35 bis 10 Millimeter bzw. eine Querschnittsfläche von 962 bis 78 mm² hat, um eine hohe Geschwindigkeit des Wasserdampfes (von 2 bis 20 m/sec) zu erhalten.

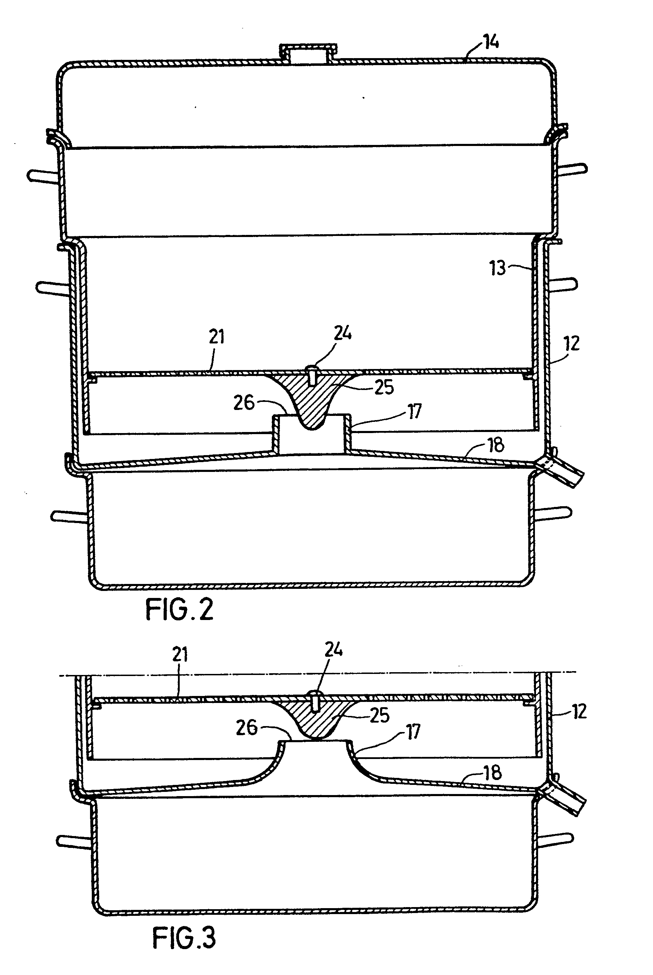

Figur 2 zeigt eine abgewandelte Lösung mit der Massgabe, dass der Boden 18 des Saftauffangbehälters 12 flacher ist als in Figur 1 dargestellt, ausgebildet ist. Weiterhin ist die Tülle 17 im wesentlichen zylindrisch. Der Fruchtbehälter 13 hat einen aufgesetzten Boden 21, der eben ausgebildet ist. An diesem ist über eine Schraube 24 ein Leit- und Sicherungskörper 25 befestigt, der in Gebrauchstellung in den Ausgang 26 der Tülle 17 hineinragt. Auch bei dieser Lösung ist ein Ringaustritt vorhanden mit der Massgabe, dass der Leitkörper 25 nach seinem Anheben nach oben den Austrittsquerschnitt der Tülle 17 so stark vergrössert, dass die Dampfgeschwindigkeit auf einen niedrigen und absolut ungefährlichen Wert absinkt (1 m/sec).

Figur 3 zeigt die Lösung, dass bei im Betrieb befindlichen Dampfentsafter der Leit- und Sicherungskörper 25 von oben lediglich an den Ausgang der Tülle heranreicht und dadurch ebenfalls die erstrebte Wirkung erreicht wird.

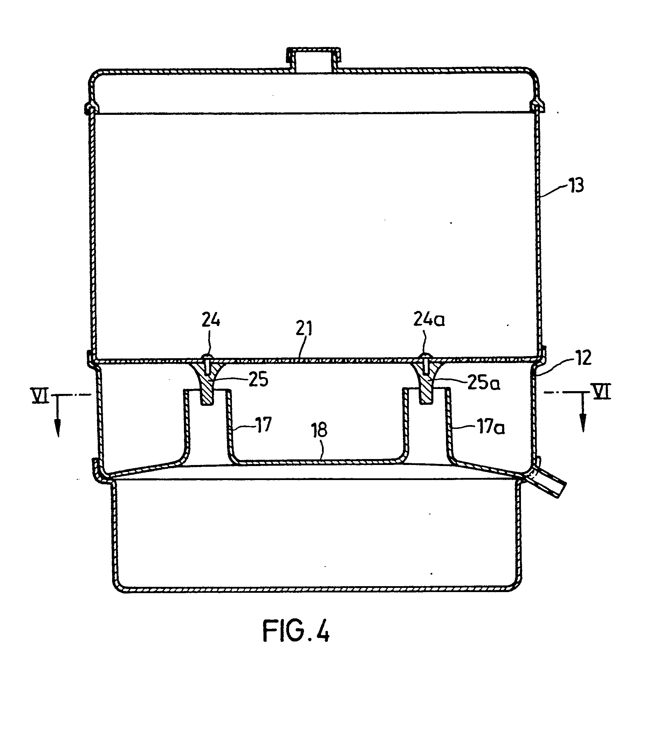

Figur 4 zeigt die Lösung, dass an dem Boden des Saftauffangbehälters mehrere Tüllen 17, 17a vorhanden sind, in die Leitkörper 25, 25a eingreifen, die ebenfalls über zugeordnete Schrauben 24, 24a am Boden 21 des Fruchtbehälters 13 befestigt sind. Da, wie zu Figur 1 ausgeführt, der Fruchtbehälter 13 keine mit Sieböffnungen versehene Seitenwandung zu haben braucht, kann zur Vermeidung der in den Figuren 1 und 2 zeichnerisch noch dargestellten parallel verlaufenden Wandungen der Behälter 12 und 13 entsprechend der Darstellung in Figur 3 der Saftauffangbehälter 12 von nur geringer Höhe sein.

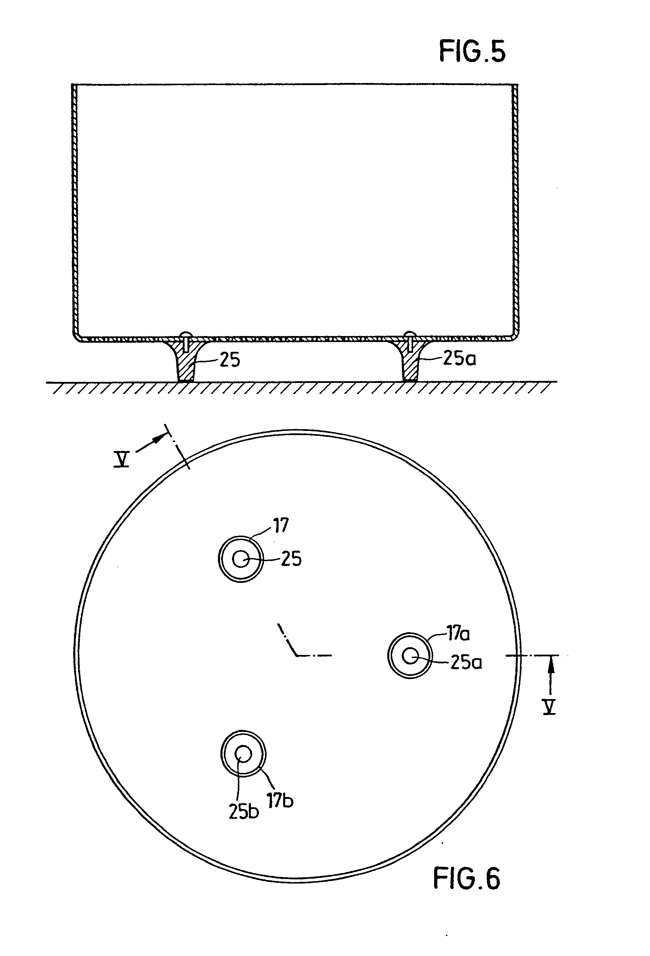

Figur 6 zeigt den Fruchtbehälter in einzelner Darstellung, um zu zeigen, dass die Leitkörper 25, 25a die Füsse des Fruchtbehälters sind. Figur 6 zeigt, dass drei Leitkörper 25, 25a und 25b vorhanden sind, die entsprechend in jeweils zugeordnete Tüllen 17, 17a und 17b eingreifen.

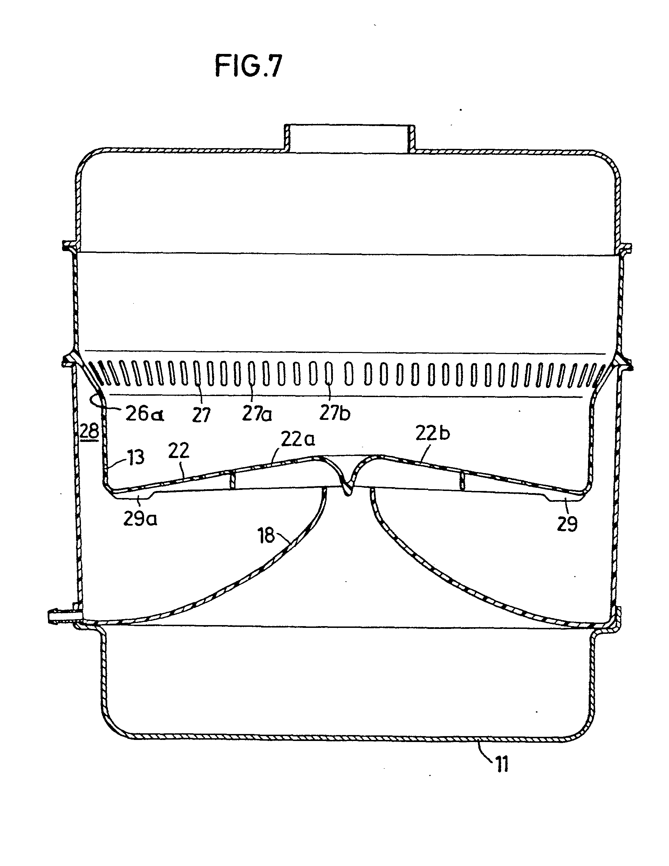

Figur 7 zeigt einen Dampfentsafter mit einem Wassertopf 11 aus einem verformten Metallblech. Der Saftauffangbehälter 18 besteht aus dem Kunststoff Polypropylen. Er ist ein Spritzgussteil. Auch der Fruchtbehälter 13 besteht als Spritzgussteil aus dem Kunststoff Polypropylen. Er hat in seiner halben Höhe eine Stufe 26a, gebildet durch einen Wandungsabschnitt, der schräg nach unten und nach innen gerichtet ist. In dieser Stufe sind ringsumlaufend eine Vielzahl von hochstehenden langgestreckten Durchbrechungen 27, 27a, 27b vorhanden. Da der untere Bereich des Fruchtbehälters einen geringeren Durchmesser als der obere Bereich hat und somit zwischen unterem Bereich und der Aussenwandung des Saftauffangbehälters ein ausreichend bemessener Ringspalt 28 vorhanden ist, gelangt der Wasserdampf über diesen Ringspalt 28 zu den Durchbrechungen 27, 27a usw., so dass er unmittelbar in den oberen Bereich des Fruchtbehälters eindringt und dort als frischer Dampf auf die dort befindlichen Früchte einwirkt.

**Patentansprüche**

1. Dampfentsafter (10) mit einem Wassertopf (11) zur Erzeugung von Wasserdampf und darauf aufgesetztem Saftauffangbehälter (12), der mit einer Dampftülle (17) versehen ist, und mit einem oberhalb des Saftauffangbehälters (12) angeordneten Fruchtbehälter (13) zur Aufnahme von Früchten (23), dessen Boden in seinem mittleren Bereich mit einem Leitkörper (25) zur Verteilung des Wasserdampfes (16) versehen ist, der aus der Dampftülle (17) austretend, durch die Sieböffnungen (22) im unteren Bereich des Fruchtbehälters (13) in diesen und zwischen die Früchte (23) eintritt und dadurch der Saft gewonnen wird, der durch die vorerwähnten Sieböffnungen des Fruchtbehälters in den Saftauffangbehälter gelangt, dadurch gekennzeichnet, dass der Leitkörper (25) zugleich als Sicherungskörper (25) ausgebildet ist, der bei dem auf den Saftauffangbehälter (12) aufgesetzten Fruchtbehälter von oben in der Weise mit der Dampftülle unter Belassung einer Ringdüse (26) zur Erzeugung einer hohen Dampfaustrittsgeschwindigkeit sehr stark eingeengt ist und mit dem Abheben des Fruchtbehälters (13) von dem Saftauffangbehälter (12) der volle Austrittsquerschnitt der Dampftülle vorhanden ist und damit die Dampfaustrittsgeschwindigkeit auf einen niedrigen für die Handhabung ungefährlichen Wert abgesenkt ist.

2. Dampfentsafter nach Anspruch 1, dadurch gekennzeichnet, dass die Tülle (17) unter Belassung eines ringsumlaufenden Spaltes von oben durch den am Boden des Fruchtbehälters vorhandenen Leit- bzw. Sicherungskörper (25) abgedeckt ist.

3. Dampfentsafter nach Anspruch 1, dadurch gekennzeichnet, dass der Leit- und Sicherungskörper (25) von oben nahe an die Dampftülle (17) heranreicht.

4. Dampfentsafter nach Anspruch 2, dadurch gekennzeichnet, dass der Leit- bzw. Sicherungskörper von oben in die Tülle eingreift.

5. Dampfentsafter nach Anspruch 1, dadurch gekennzeichnet, dass die Tülle (17) an ihrem Auslass einen Durchmesser von 35 bis 10 mm bzw. eine Querschnittsfläche von 962 bis 78 mm$^2$ hat.

6. Dampfentsafter nach Anspruch 5, dadurch gekennzeichnet, dass die Tülle (17) an ihrem Auslass einen Durchmesser von 35 mm hat und in diesen Auslass ein Leit- bzw. Sicherungskörper eingreift, der im Bereich des Auslasses einen Durchmesser von 15 mm hat.

7. Dampfentsafter nach Anspruch 6, dadurch gekennzeichnet, dass die Tülle (17) in der Ebene ihrer Auslassöffnung einen Durchmesser von 30 mm hat, der Leit- bzw. Sicherungskörper (25) in der Ebene des Auslasses der Tülle einen Durchmesser von 10 mm hat und mit einer Länge von 10 mm in die Tülle hineinreicht.

8. Dampfentsafter nach den Ansprüchen 1 bis 7, dadurch gekennzeichnet, dass der Boden des Saftauffangbehälters (12) von der in halber Höhe oder etwa halben Höhe des Saftauffangbehälters angeordneten mittigen Auslassöffnung der Tülle (17) aus mit umlaufender konkaver Wölbung zum unteren und äusseren Umfangrand verläuft.

9. Dampfentsafter nach den Ansprüchen 1 und 2, dadurch gekennzeichnet, dass der Leitkörper und Sicherungskörper (25) mit dem Boden (21) des Fruchtbehälters (13) einstückig ist.

10. Dampfentsafter nach Anspruch 9, dadurch gekennzeichnet, dass der Leit- und Sicherungskörper (25) in der Mitte des Bodens des Fruchtbehälters nach unten vorstehend mit abgerundeter Kuppe angeordnet ist und der angrenzende, mit Sieböffnungen versehene Boden des Fruchtbehälters über eine Umkehrkurve konkav gewölbt ausgebildet ist und diese Wölbung zum äusseren Rand des Fruchtbehälters abfällt.

11. Dampfentsafter nach Anspruch 8, dadurch gekennzeichnet, dass der Fruchtbehälter an seinem äusseren Rand mit Füssen (29, 29a) geringer Höhe versehen ist und die Kuppe bzw. Spitze des Leit- und Sicherungskörpers (25) um ein geringes Mass oberhalb der Ebene der Standfläche der Füsse angeordnet ist.

12. Dampfentsafter nach Anspruch 1, dadurch gekennzeichnet, dass der Fruchtbehälter (13) in seinem oberen Teil einen Durchmesser hat, der dem Saftauffangbehälter (12) entspricht und im Bereich der halben Höhe als Stufe (26) eine stufenförmige Verringerung des Durchmessers des unteren Teiles vorhanden ist und in dieser ringsumlaufenden Stufe (26) Durchtrittsöffnungen (27, 27a) vorhanden sind.

13. Dampfentsafter nach Anspruch 12, dadurch gekennzeichnet, dass die Stufe (26) aus einem umlaufenden Wandungsabschnitt besteht, der schräg nach unten und in Richtung nach innen gerichtet ist.

14. Dampfentsafter nach Anspruch 1 und einem oder mehreren der Ansprüche 2 bis 7, dadurch gekennzeichnet, dass im Boden (18) des Saftauffangbehälters (12) über die Fläche des Bodens (18) gleichmässig verteilt mehrere Tüllen (17), insbesondere drei Tüllen (17, 17a, 17b) vorhanden sind.

15. Dampfentsafter nach Anspruch 1, dadurch gekennzeichnet, dass der Leit- bzw. Sicherungskörper (25) an der Unterseite des Fruchtbehälters (13) befestigt ist.

16. Dampfentsafter nach Anspruch 15, dadurch gekennzeichnet, dass mehrere Leitkörper (25, 25a, 25b) die Füsse des Fruchtbehälters (13) sind.

17. Dampfentsafter nach Anspruch 1, dadurch gekennzeichnet, dass der Saftauffangbehälter (12) aus Kunststoff besteht.

18. Dampfentsafter nach Anspruch 1, dadurch gekennzeichnet, dass der Fruchtbehälter (13) aus Kunststoff besteht.

19. Dampfentsafter nach den Ansprüchen 17 und 18, dadurch gekennzeichnet, dass der Saftauffangbehälter (12) und der Fruchtbehälter (13) aus dem Kunststoff Polypropylen bestehen.

**Claims**

1. Steam-operated juice extractor (10) with a water pot (11) for the generation of water vapour and a juice-collecting container (12), which is placed thereon and provided with a steam nozzle (17), and with a fruit container (13), which is arranged above the juice-collecting container (12) for the reception of fruits (23) and the base of which is provided in its middle region with a guide body (25) for the distribution of the water vapour (16), which issues out of the steam nozzle (17) and enters through the sieve openings (22) in the lower region of the fruit container (13) into this and between the fruits (23) and thereby the juice is obtained, which gets through the aforementioned sieve openings of the fruit container into the juice-collecting container, characterised thereby, that the guide body (25) is at the same time constructed as securing body (25), which when the fruit container is placed from above onto the juice-collecting container (12) co-operates with the steam nozzle (17) in the manner that the exit cross-section is very strongly constricted while leaving an annular orifice (26) for the generation of a high steam exit speed and the full exit cross-section of the steam nozzle is present on the fruit container (13) being raised off from the juice-collecting container (12) and the steam exit speed is thereby lowered to a low value not dangerous for the manipulation.

2. Steam-operated juice extractor according to claim 1, characterised thereby, that the nozzle (17) is covered from above by the guide or securing body (25) present at the base of the fruit container while leaving an encircling gap.

3. Steam-operated juice extractor according to claim 1, characterised thereby, that the guide and securing body (25) reaches closely to the steam nozzle (17) from above.

4. Steam-operated juice extractor according to claim 2, characterised thereby, that the guide or securing body engages into the nozzle from above.

5. Steam-operated juice extractor according to claim 1, characterised thereby, that the nozzle (17) at its outlet has a diameter of 35 to 10 millimetres or a cross-sectional area of 962 to 78 square millimetres

6. Steam-operated juice extractor according to claim 5, characterised thereby, that the nozzle (17) at its outlet has a diameter of 35 millimetres and a guide or securing body, which in the region of the outlet has a diameter of 15 millimetres, engages into this outlet.

7. Steam-operated juice extractor according to claim 6, characterised thereby, that the nozzle (17) has a diameter of 30 millimetres in the plane of its outlet opening, the guide or securing body (25) has a diameter of 10 millimetres in the plane of the nozzle and reaches into the nozzle by a length of 10 millimetres.

8. Steam-operated juice extractor according to the claims 1 to 7, characterised thereby, that the base of the juice-collecting container (12) extends with encircling concave curvature out from the central outlet opening of the nozzle (17), which is arranged at half the height or about half the height of the juice-collecting container, towards the lower and outer circumferential rim.

9. Steam-operated juice extractor according to the claims 1 and 2, characterised thereby, that the guide and securing body (25) is integral with the base (21) of the fruit container (13).

10. Steam-operated juice extractor according to claim 9, characterised thereby, that the guide and securing body (25) is arranged projecting downwardly by rounded-off dome in the centre of the base of the fruit container and the adjoining base, which is provided with sieve openings, of the fruit container is formed to be concavely curved by way of a reversing curve and this curvature decreases towards the outer rim of the fruit container.

11. Steam-operated juice extractor according to claim 8, characterised thereby, that the fruit container is provided at its outer rim with feet (29, 29a) of small height and the dome or point of the guide and securing body (25) is arranged by a small amount above the plane of the support surface of the feet.

12. Steam-operated juice extractor according to claim 1, characterised thereby, that the fruit container (13) in its upper part has a diameter which corresponds to the juice-collecting container (12) and a step-shaped reduction of the diameter of the lower part is present as step (26) in the region of half the height and passage openings (27, 27a) are present in this encircling step (26).

13. Steam-operated juice extractor according to claim 12, characterised thereby, that the step (26) consists of an encircling wall portion which is directed obliquely downwards and in inward direction.

14. Steam-operated juice extractor according to claim 1 and one or more of the claims 2 to 7, characterised thereby, that several nozzles (17), in particular three nozzles (17, 17a, 17b), are present in the base (18) of the juice-collecting container (12) and distributed uniformly over the area of the base (18).

15. Steam-operated juice extractor according to claim 1, characterised thereby, that the guide or securing body (25) is fastened at the underside of the fruit container (13).

16. Steam-operated juice extractor according to claim 15, characterised thereby, that several guide bodies (25, 25a, 25b) are the feet of the fruit container (13).

17. Steam-operated juice extractor according to claim 1, characterised thereby, that the juice-collecting container (12) consists of synthetic material.

18. Steam-operated juice extractor according to claim 1, characterised thereby, that the fruit container (13) consists of synthetic material.

19. Steam-operated juice extractor according to the claims 17 and 18, characterised thereby, that the juice-collecting container (12) and the fruit container (13) consists of the synthetic material polypropylene.

**Revendications**

1. Extracteur de jus à vapeur (10) comportant un bac d'eau (11) destiné à la production de vapeur d'eau et sur lequel est placé un récipient collecteur de jus (12) qui est pourvu d'un goulot à vapeur (17), ainsi qu'un récipient à fruits (13) disposé au-dessus du récipient collecteur de jus (12) et destiné à recevoir des fruits (23), le fond de ce récipient (13) comportant, dans sa zone centrale, un corps canalisateur (25) destiné à répartir la vapeur d'eau (16) qui, à sa sortie du goulot (17), pénètre dans le récipient à fruits (13), ainsi qu'entre les fruits (23) en passant par les ouvertures de filtration (22) pratiquées dans la zone inférieure de ce récipient à fruits (13), permettant ainsi d'obtenir le jus qui, via les ouvertures de filtration précitées du récipient à fruits, parvient dans le récipient collecteur de jus, caractérisé en ce que le corps canalisateur (25) est en même temps réalisé comme corps de sécurité (25) qui, lorsque le récipient à fruits est posé sur le récipient collecteur de jus (12), coopère par le dessus avec le goulot à vapeur (17) de telle sorte que la section transversale de sortie de ce dernier soit très fortement rétrécie, tout en ménageant une buse annulaire (26) destinée à imprimer une haute vitesse de sortie à la vapeur, et également de telle sorte que, lorsque le récipient à fruits (13) est soulevé à l'écart du récipient collecteur de jus (12), la section transversale de sortie du goulot à vapeur soit totalement libre et qu'ainsi, la vitesse de sortie de la vapeur soit réduite à une faible vapeur ne présentant aucun danger pour le maniement.

2. Extracteur de jus à vapeur selon la revendication 1, caractérisé en ce que, tout en ménageant un espace annulaire périphérique libre, le goulot (17) est recouvert par le dessus au moyen du corps canalisateur ou de sécurité (25) prévu au fond du récipient à fruits.

3. Extracteur de jus à vapeur selon la revendication 1, caractérisé en ce que le corps canalisateur et de sécurité (25) est rapproché par le dessus du goulot à vapeur (17).

4. Extracteur de jus à vapeur selon la revendication 2, caractérisé en ce que le corps canalisateur ou de sécurité vient s'engager par le haut dans le goulot.

5. Extracteur de jus à vapeur selon la revendication 1, caractérisé en ce que, à sa sortie, le goulot (17) a un diamètre de 35 à 10 mm ou une section transversale de 962 à 78 mm².

6. Extracteur de jus à vapeur selon la revendication 5, caractérisé en ce que, à sa sortie, le goulot (17) a un diamètre de 35 mm tandis que, dans cette sortie, vient s'engager un corps canalisateur ou de sécurité qui, dans la zone de sa sortie, a un diamètre de 15 mm.

7. Extracteur de jus à vapeur selon la revendication 6, caractérisé en ce que, dans le plan de son ouverture de sortie, le goulot (17) a un diamètre de 30 mm tandis que, dans le plan de la sortie du goulot, le corps canalisateur ou de sécurité (25) a un diamètre de 10 mm et pénètre, sur une longueur de 10 mm, dans le goulot.

8. Extracteur de jus à vapeur selon les revendications 1 à 7, caractérisé en ce que, de l'ouverture de sortie centrale du goulot (17), située à mi-hauteur ou à peu près à mi-hauteur du récipient collecteur de jus (12), le fond de ce dernier s'étend avec un bombement périphérique concave jusqu'au bord périphérique inférieur et extérieur.

9. Extracteur de jus à vapeur selon les revendications 1 à 2, caractérisé en ce que le corps canalisateur et de sécurité (25) est réalisé d'une seule pièce avec le fond (21) du récipient à fruits (13).

10. Extracteur de jus à vapeur selon la revendication 9, caractérisé en ce que le corps canalisateur et de sécurité (25) est disposé au centre du fonds du récipient à fruits en ressortant en saillie vers le bas avec une calotte arrondie, tandis que le fond adjacent du récipient à fruits, qui est pourvu d'ouvertures de filtration, est réalisé avec un bombement concave d'une courbure inverse, ce bombement allant en diminuant jusqu'au bord extérieur du récipient à fruits.

11. Extracteur de jus à vapeur selon la revendication 8, caractérisé en ce que, sur son bord extérieur, le récipient à fruits est pourvu de pieds (29, 29a) de faible hauteur, tandis que la calotte ou la pointe du corps canalisateur et de sécurité (25) est disposée légèrement au-dessus du plan de la surface sur laquelle se dressent les pieds.

12. Extracteur de jus à vapeur selon la revendication 1, caractérisé en ce que, dans sa partie supérieure, le récipient à fruits (13) a un diamètre qui correspond à celui du récipient collecteur de jus (12) et qui, dans la zone située à la moitié de sa hauteur, comporte, sous forme d'un gradin (26), une réduction de diamètre de sa partie inférieure, des ouvertures de passage (27, 27a) étant pratiquées dans ce gradin annulaire périphérique (26).

13. Extracteur de jus à vapeur selon la revendication 12, caractérisé en ce que le gradin (26) est constitué d'un tronçon de paroi périphérique dirigé en oblique vers le bas et vers l'intérieur.

14. Extracteur de jus à vapeur selon la revendication 1 et une ou plusieurs des revendications 2 à 7, caractérisé en ce que, dans le fond (18) du récipient collecteur de jus (12) et sur la surface de ce fond (18), sont répartis uniformément plusieurs goulots (17), en particulier, trois goulots (17, 17a, 17b).

15. Extracteur de jus à vapeur selon la revendication 1, caractérisé en ce que le corps canalisateur et de sécurité (25) est fixé à la face inférieure du récipient à fruits (13).

16. Extracteur de jus à vapeur selon la revendication 15 caractérisé en ce que plusieurs corps canalisateurs (25, 25a, 25b) constituent les pieds du récipient à fruits (13).

17. Extracteur de jus à vapeur selon la revendication 1, caractérisé en ce que le récipient collecteur de jus (12) est réalisé en matière synthétique.

18. Extracteur de jus à vapeur selon la revendication 1, caractérisé en ce que le récipient à fruits (13) est réalisé en matière synthétique.

19. Extracteur de jus à vapeur selon les revendications 17 et 18, caractérisé en ce que le récipient collecteur de jus (12) et le récipient à fruits (13) sont réalisés en matière synthétique, à savoir le polypropylène.

FIG.1

FIG.2

FIG.3

FIG.4

FIG.5

FIG.6

# FIG.7

26a  27  27a  27b

28

22b

13  22  22a  22b

29a  29

18

11